# EUROPEAN PATENT APPLICATION

(11) **EP 4 765 450 A1**
(43) Date of publication of application: **24.06.2026**
(21) Application number: 25212888.9
(22) Date of filing: 03.11.2025
(51) Int. Cl.: H01M 50/536, H01M 50/528, H01M 50/54, H01M 50/538, H01M 50/103

(54) **BATTERY, METHOD OF MANUFACTURING A SECONDARY BATTERY, AND BATTERY PACK**

(30) Priority: 18.12.2024 KR 20240190082
(71) Applicant: SAMSUNG SDI CO., LTD., Yongin-si, Gyeonggi-do 17084 (KR)
(72) Inventor: LEE, Hyun Soo, 16678 Suwon-si, Gyeonggi-do (KR)
(74) Representative: Gulde & Partner

(57) **Abstract**

A secondary battery, a method of manufacturing the secondary battery, and a battery pack including the secondary battery are provided herein. The secondary battery includes: a case having an internal space; a cap assembly including a cap plate closing the case and a terminal supported by the cap plate; a current collecting plate located in the internal space and electrically connected to the terminal; an electrode assembly accommodated in the internal space; and a plurality of electrode tabs protruding from the electrode assembly, each including a root portion connected to the electrode assembly, a weld portion welded to the current collecting plate and biased to one side relative to a position of the root portion, and an intermediate portion connecting the root portion and the weld portion and having a peak point biased to an opposite side of the one side.

## Description

Various aspects of the present disclosure relates to a secondary battery, a method of manufacturing the secondary battery, and a battery pack.

### RELATED ART

With the recent and rapid spread of electronic apparatuses that use secondary batteries, such as mobile phones, laptop computers, electric vehicles, and/or the like, the market for secondary batteries having high energy densities and high capacities has been increasing. Accordingly, research and development to improve the performance of lithium secondary batteries is actively being conducted.

A lithium secondary battery is a battery that includes a positive electrode and a negative electrode, each electrode including active materials capable of intercalation and deintercalation of lithium ions, and an electrolyte. The lithium secondary battery may produce electrical energy through oxidation and reduction reactions when lithium ions are intercalated/deintercalated into/from the positive electrode and negative electrode.

The above information disclosed in this Background section is intended to enhance understanding of the background of the disclosure and may contain information that does not constitute prior art.

### SUMMARY

Aspects of one or more embodiments of the present disclosure is directed to providing a secondary battery, a method of manufacturing a secondary battery, and a battery pack in which a plurality of electrode tabs of an electrode assembly may all be welded to a current collecting plate.

According to one or more aspects of the present disclosure, a secondary battery may include: a case having an internal space; a cap assembly including a cap plate that closes the case and a terminal supported by the cap plate; a current collecting plate located in the internal space and electrically connected to the terminal; an electrode assembly accommodated in the internal space; and a plurality of electrode tabs protruding from the electrode assembly, each including a root portion connected to the electrode assembly, a weld portion welded to the current collecting plate and biased to one side relative to a position of the root portion, and an intermediate portion connecting the root portion and the weld portion and having a peak point biased to an opposite side relative to the one side.

According to various aspects, the plurality of electrode tabs may overlap in a thickness direction of the electrode assembly.

According to various aspects, for at least one of the electrode tabs, the weld portion may be biased to one side in a width direction of the current collecting plate relative to the position of the root portion, and the peak point may be biased to the opposite side of the one side in the width direction of the current collecting plate relative to the position of the root portion.

According to various aspects, the current collecting plate may include a plurality of welding line portions formed by welding (e.g., welded) to the welding portions of the electrode tabs, and extending in a width direction of the current collecting plate and spaced and/or apart (e.g., spaced apart or separated) in a longitudinal direction of the current collecting plate.

According to various aspects, for at least one of the electrode tabs, the weld portion may be located between the electrode assembly and the current collecting plate and may be welded to a side of the current collecting plate facing (e.g., opposite to) the electrode assembly.

According to various aspects, the secondary battery may further include a current collector connecting the terminal and the current collecting plate.

According to various aspects, the electrode assembly may include a first electrode, a second electrode separated from the first electrode, and a separator arranged between the first electrode and the second electrode.

According to various aspects, the electrode tabs may include a first electrode tab connected to the first electrode and a second electrode tab connected to the second electrode, the current collecting plate may include a first current collecting plate welded to the first electrode tab and a second current collecting plate welded to the second electrode tab, the terminal may include a first terminal and a second terminal spaced and/or apart (e.g., spaced apart or separated) from the first terminal, and the current collector may include a first current collector connecting the first terminal and the first current collecting plate and a second current collector connecting the second terminal and the second current collecting plate.

According to various aspects, the case may include a first side wall and a second side wall facing (e.g., opposite to) each other, the first current collecting plate may be located between the electrode assembly and the first sidewall in the internal space, and the second current collecting plate may be located between the electrode assembly and the second sidewall in the internal space.

According to one or more aspects of the present disclosure, a method of manufacturing a secondary battery includes: an electrode assembly and electrode tab provision operation of supplying an electrode assembly having a plurality of electrode tabs protruding from the electrode assembly; an electrode tab bending operation of bending the plurality of electrode tabs so that the plurality of electrode tabs lie in (substantially) the same direction with respect to the electrode assembly; a current collecting plate biasing operation of biasing the current collecting plate in the same direction in which the plurality of electrode tabs are bent with respect to the electrode assembly so that the current collecting plate comes into contact with the plurality of electrode tabs; an electrode tab welding operation of welding the current collecting plate and the plurality of electrode tabs; a current collecting plate repositioning operation of moving the current collecting plate to a position that is not biased with respect to the electrode assembly.

According to various aspects, the electrode tab may include a root portion connected to the electrode assembly, a weld portion welded to the current collecting plate in the electrode tab welding operation, and an intermediate portion connecting the root portion and the weld portion, and wherein the moving of the current collecting plate biases, the weld portion may be biased to one side relative to the position of the root portion, and may form a peak point in the intermediate portion that is biased to an opposite side relative to the one side.

According to various aspects, by the moving of the current collecting plate, the weld portion may be biased to one side relative to the root portion in a width direction of the current collecting plate, and the peak point may be biased to the opposite side of the one side in the width direction of the current collecting plate relative to the root portion.

According to various aspects, the secondary battery manufacturing method may further include a current collecting plate and electrode tab insertion operation of inserting the electrode assembly, the welded current collecting plate and electrode tabs into a case.

According to various aspects, wherein, prior to the inserting of the electrode assembly, the secondary battery manufacturing method may further include: a cap assembly and current collector connection operation of connecting a current collector to a terminal of a cap assembly including a cap plate and the terminal supported by the cap plate; and a current collecting plate and current collector connection operation of connecting the current collector to the current collecting plate.

According to one or more aspects of the present disclosure, there is provided a battery pack including: a housing; and a plurality of secondary batteries arranged inside the housing, wherein each of the secondary batteries includes: a case having an internal space; a cap assembly including a cap plate closing the case and a terminal supported by the cap plate; a current collecting plate located in the internal space and electrically connected to the terminal; an electrode assembly accommodated in the internal space; and a plurality of electrode tabs protruding from the electrode assembly, each including a root portion connected to the electrode assembly, a weld portion welded to the current collecting plate and biased to one side relative to a position of the root portion, and an intermediate portion connecting the root portion and the weld portion and having a peak point biased to an opposite side relative to the one side.

### BRIEF DESCRIPTION OF THE DRAWINGS

The accompanying drawings are included to provide a further understanding of the present disclosure, and are incorporated in and constitute a part of this specification. The drawings illustrate example embodiments of the present disclosure and, together with the description, serve to explain principles of the present disclosure. In the drawings:
FIG. 1 is a perspective view schematically illustrating a battery pack, according to one or more aspects of the present disclosure;
FIG. 2 is a perspective view schematically illustrating a secondary battery, according to one or more aspects of the present disclosure;
FIG. 3 is an exploded perspective view schematically illustrating the secondary battery according to one or more aspects of the present disclosure;
FIG. 4 is a cross-sectional view taken along the line S1-S1 of FIG. 2, according to one or more aspects of the present disclosure;
FIG. 5 is an exploded perspective view schematically illustrating an electrode assembly, according to one or more aspects of the present disclosure;
FIG. 6 is a side view illustrating the inside of a case taken along the line S2-S2 of FIG. 4, according to one or more aspects of the present disclosure;
FIG. 7 is a side view illustrating the inside of the case taken along the line S3-S3 of FIG. 4, according to one or more aspects of the present disclosure;
FIG. 8 is an enlarged perspective view illustrating first and second collecting plates of FIG. 4, according to one or more aspects of the present disclosure;
FIG. 9 is a cross-sectional view illustrating the electrode assembly, a plurality of first current collecting plates, and first electrode tabs taken along line S4-S4 of FIG. 4, according to one or more aspects of the present disclosure;
FIG. 10 is a cross-sectional view illustrating a state in which the plurality of first electrode tabs are bent before the first current collecting plate and the plurality of first electrode tabs of FIG. 9 is welded to each other, according to one or more aspects of the present disclosure;
FIG. 11 is a cross-sectional view illustrating a state in which the first current collecting plate is positioned to be biased with respect to the electrode assembly when the first current collecting plate and the plurality of first electrode tabs of FIG. 9 are welded, according to one or more aspects of the present disclosure;
FIG. 12 is a cross-sectional view illustrating the electrode assembly, a plurality of second current collecting plates, and second electrode tabs taken along the line S5-S5 of FIG. 4, according to one or more aspects of the present disclosure;
FIG. 13 is a cross-sectional view illustrating a state in which the plurality of second electrode tabs are bent before the second current collecting plate and the plurality of second electrode tabs of FIG. 12 are welded to each other, according to one or more aspects of the present disclosure; and
FIG. 14 is a cross-sectional view illustrating a state in which the second current collecting plate is positioned to be biased with respect to the electrode assembly when the first current collecting plate and the plurality of first electrode tabs of FIG. 12 are welded, according to one or more aspects of the present disclosure.

### DETAILED DESCRIPTION

The present disclosure may be modified in many alternate forms, and thus specific embodiments will be illustrated in the drawings and described in more detail. It should be understood, however, that this is not intended to limit the present disclosure to the particular forms disclosed, but rather, is intended to cover all modifications, equivalents, and alternatives falling within the scope of the present disclosure.

Hereinafter, example embodiments and various aspects of the disclosure will be described in more detail with reference to the accompanying drawings. The present disclosure, however, may be embodied in various different forms, and should not be construed as being limited to only the illustrated embodiments herein. Rather, these embodiments are provided as examples so that this disclosure will be thorough and complete, and will fully convey the aspects and features of the present disclosure to those skilled in the art. Accordingly, processes, elements, and techniques that are not necessary to those having ordinary skill in the art for a complete understanding of the aspects and features of the present disclosure may not be described.

Unless otherwise defined, all terms (including technical and scientific terms) used herein have the same meaning as commonly understood by one of ordinary skill in the art to which the present disclosure belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

It will be understood that when an element, such as an area, layer, film, region or portion, is referred to as being "on," "connected to," or "coupled to" another element, it can be directly on, connected to, or coupled to the other element, or one or more intervening elements may be present. In contrast, when an element or layer is referred to as being "directly on," "directly connected to", "directly coupled to", or "immediately adjacent to" another element or layer, there are no intervening elements or layers present. In addition, it will also be understood that when an element is referred to as being "between" two elements, it can be the only element between the two elements, or one or more intervening elements may also be present.

In the drawings, the relative sizes (e.g., including lengths, widths and thicknesses) of elements, layers, and regions may be exaggerated for clarity. In the drawings, dimensions of the various elements, layers, etc. may be exaggerated for clarity of illustration. Unless otherwise noted, like reference numerals denote like elements throughout the attached drawings and the written description, and thus, duplicative descriptions thereof may not be provided.

As used herein, the term "and/or" includes any and all combinations of one or more of the associated listed items. Further, the use of "may" when describing embodiments of the present disclosure refers to "one or more embodiments of the present disclosure." . Unless otherwise apparent from the disclosure, expressions such as "at least one of," "a plurality of," "one of," and other prepositional phrases, when preceding a list of elements, should be understood as including the disjunctive if written as a conjunctive list and vice versa. For example, the expressions "at least one of a, b, or c," "at least one of a, b, and/or c," "one selected from the group consisting of a, b, and c," "at least one selected from among a, b, and c," "at least one from among a, b, and c," "one from among a, b, and c", "at least one of a to c" indicates only a, only b, only c, both a and b, both a and c, both b and c, all of a, b, and c, or variations thereof.

As used herein, the terms "use," "using," and "used" may be considered synonymous with the terms "utilize," "utilizing," and "utilized," respectively.

As used herein, the term "substantially," "about," and similar terms are used as terms of approximation and not as terms of degree, and are intended to account for the inherent deviations in measured or calculated values that would be recognized by those of ordinary skill in the art. "Substantially" as used herein, is inclusive of the stated value and means within an acceptable range of deviation for the particular value as determined by one of ordinary skill in the art, considering the measurement in question and the error associated with measurement of the particular quantity (i.e., the limitations of the measurement system). For example, "substantially" may mean within one or more standard deviations, or within ± 30%, 20%, 10%, 5% of the stated value. Also, it should be understood that, even if the terms "about," "approximately," or "substantially" are not expressly recited in a given claim element, the scope of such claim element is intended to include variations that are insubstantial or within the understanding of one of ordinary skill in the art. For example, numerical values and ranges provided herein are intended to include tolerances and measurement uncertainties that would be recognized by those skilled in the art, and the claims should be construed accordingly to encompass such equivalents.

It is to be understood that, although the terms "first," "second," "third," etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the scope of the present disclosure.

Spatially relative terms, such as "beneath," "below," "lower," "above," "upper," and the like, may be used herein for ease of explanation to describe one element or feature's relationship to another element(s) or feature(s) as illustrated in the figures. It is to be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (*e.g.*, rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a," "an" and "the" are intended to include the plural forms as well, unless the context clearly indicates otherwise. It will be further understood that the terms "comprises," "comprising," "includes," "including," "have," and "having," when used in this specification, specify the presence of the stated features, integers, steps, operations, elements, and/or components, but do not preclude the presence or addition of one or more other features, integers, steps, operations, elements, components, and/or groups thereof. Additionally, the terms "comprise(s)/comprising," "include(s)/including," "have/has/having" or similar terms include or support the terms "consisting of" and "consisting essentially of," indicating the presence of stated features, integers, steps, operations, elements, and/or components, without or essentially without the presence of other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, and/or the like as being "the same" may refer to that they are "substantially the same." The phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

When an element is referred to as being arranged (or located or positioned) on the "above (or below)" or "on (or under)" a component, it may refer to that the element is placed in contact with the upper (or lower) surface of the component and may also refer to that another component may be interposed between the component and any element arranged (or located or positioned) on (or under) the component.

In addition, it is to be understood that when an element is referred to as being "coupled," "linked," or "connected" to another element, the elements may be directly "coupled," "linked," or "connected" to each other, or one or more intervening elements may be present therebetween, through which the element may be "coupled," "linked," or "connected" to another element. In addition, when a part is referred to as being "electrically coupled" to another part, the part may be directly electrically connected to another part or one or more intervening parts may be present therebetween such that the part and the another part are indirectly electrically connected to each other.

Throughout the specification, when "A and/or B" is stated, it refers to A, B, or A and B, unless otherwise stated. For example, "and/or" includes any or all combinations of a plurality of items enumerated. When "C to D" is stated, it refers to C or more and D or less, unless otherwise specified.

The terms used in the present specification are for describing one or more embodiments of the present disclosure and are not intended to limit the present disclosure.

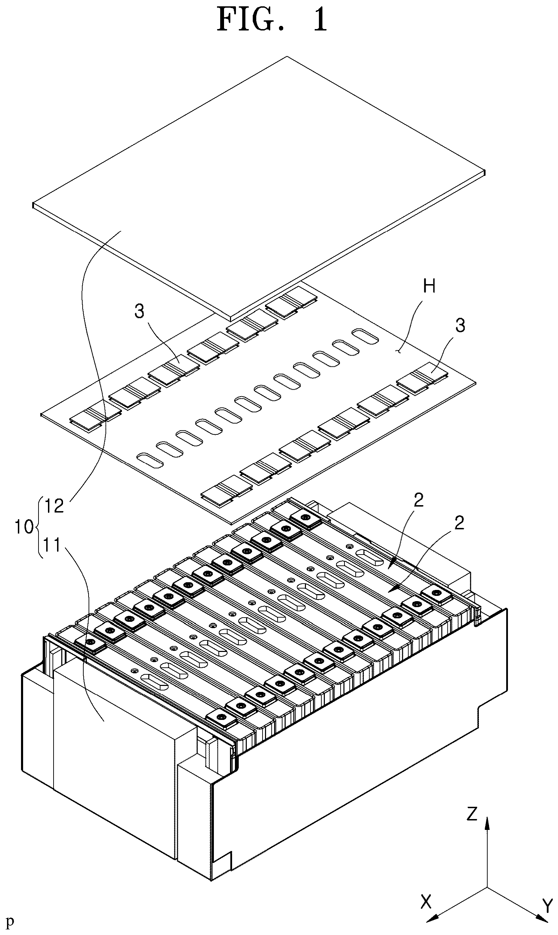

FIG. 1 is a perspective view schematically illustrating a configuration of a battery pack according to one or more aspects of the present disclosure.

Referring to FIG. 1, a battery pack 1 according to one or more aspects may include a housing 10, a secondary battery 2, and a bus bar 3.

The housing 10 may form an approximate exterior of the battery pack 1 and may provide a space in which the secondary battery 2 may be accommodated.

The housing 10 according to one or more aspects may include a housing body 11 and a cover 12.

The housing body 11 may be formed to have the shape of a box with an empty interior and one open side. A cross-sectional shape of the housing body 11 is not limited to the quadrangular shape illustrated in FIG. 1 and may be designed to have any of one or more suitable shapes such as polygonal, circular, oval, or other shapes.

The cover 12 may be connected to the housing body 11 and may close the internal space of the housing body 11. For example, the cover 12 may be formed to have a substantially plate shape (e.g., substantially flat, straight shape in which the thickness is substantially smaller than the other two dimensions) and may be arranged to face the open side of the housing body 11. The cover 12 may be fixed to the housing body 11 by any of one or more suitable types (kinds) of coupling methods, such as bolting, welding, fitting, and/or the like.

The secondary battery 2 may function as a unit structure for storing and supplying power in the battery pack 1. The secondary battery 2 may be arranged in the housing 10.

A plurality of secondary batteries 2 may be provided. The plurality of secondary batteries 2 may be arranged in two or more rows in at least one of a longitudinal direction (an X-axis direction based on FIG. 1) and/or a width direction (a Y-axis direction based on FIG. 1) of the housing 10. FIG. 1 illustrates that the plurality of secondary batteries 2 are arranged in six rows (e.g., six rows of secondary battery pairs) in a longitudinal direction of the housing 10, but the arrangement of the plurality of secondary batteries 2 is not limited thereto and may be designed to have one or more suitable arrangements. The plurality of secondary batteries 2 may be arranged in parallel. The number of secondary batteries 2 may be designed in one or more suitable ways depending on the size, shape, and/or the like of the housing 10.

The plurality of secondary batteries 2 may be electrically connected by the bus bar 3.

The bus bar 3 according to one or more aspects may be arranged between the cover 12 and the secondary batteries 2. A plurality of bus bars 3 may be provided. Each bus bar 3 may connect a pair of neighboring secondary batteries 2 in series or in parallel.

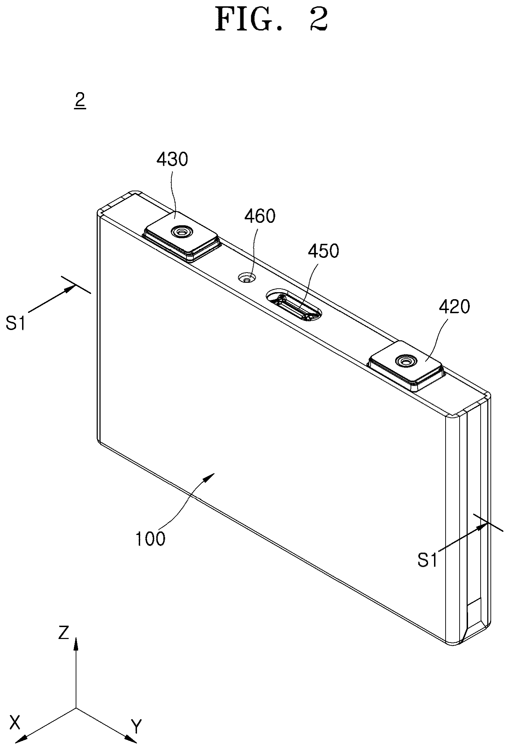

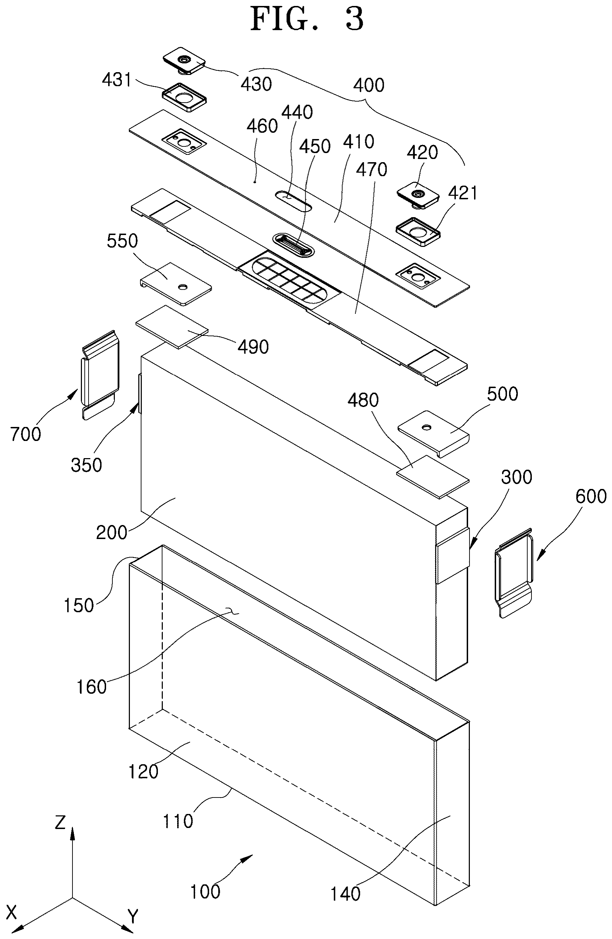

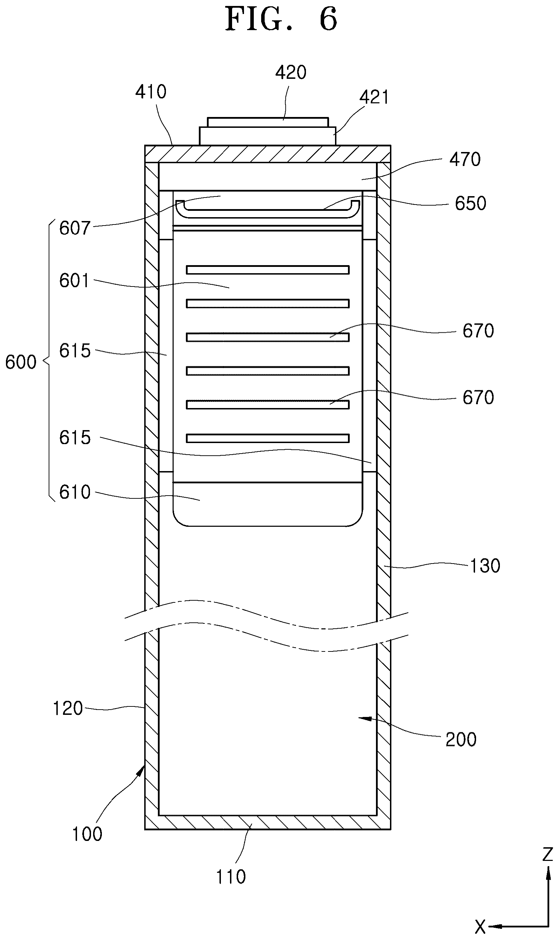

For example, a first terminal 420 (see, *e.g*., FIG. 2) of one secondary battery 2 among the pair of neighboring secondary batteries 2 and a first terminal 420 (see, *e.g*., FIG. 2) of the other of the neighboring secondary batteries 2 may be arranged to face each other in the longitudinal direction of the housing 10. For example, a front wall 120 (see, *e.g*., FIG. 3) of one of the neighboring secondary batteries 2 may be arranged to face a rear wall 130 (see, *e.g*., FIG. 6) of the other secondary battery 2.

The bus bar 3 may be connected to the first terminals 420 of a pair of secondary batteries 2 adjacent to each other and another bus bar 3 may be connected to the second terminal 430 of one of the pair of secondary batteries 2 and a second terminal 430 of another secondary battery 2 that is also adjacent to the one of the pair of secondary batteries 2. Accordingly, the plurality of secondary batteries 2 may be connected to each other in series by the bus bar 3.

However, the bus bar 3 is not limited to this connection form, and may also be connected to each of the first terminal 420 of one of the pair of neighboring secondary batteries 2 and the first terminal 420 of the other secondary battery 2 or connected to each of the second terminal 430 of one of the pair of neighboring secondary batteries 2 and the second terminal 430 of the other secondary battery 2.

The bus bar 3 may be formed of an electrically conductive material such as copper, aluminum, nickel, and/or the like. A specific shape of the bus bar 3 is not limited to that shown in FIG. 1, and may be designed to have one or more suitable shapes capable of electrically connecting the neighboring secondary batteries 2.

The plurality of bus bars 3 may be supported in the housing 10 by a bus bar holder H.

The bus bar holder H according to one or more aspects may be formed to have a flat plate shape. The bus bar holder H may be arranged between the cover 12 and the secondary batteries 2. The bus bar 3 may be fixed to the bus bar holder H by one or more suitable types (kinds) of coupling methods such as fitting, bolting, injection joining, and/or the like. The bus bar holder H may be configured to include an electrically insulating polymer compound material.

Hereinafter, the secondary battery 2 according to one or more aspects of the present disclosure will be described.

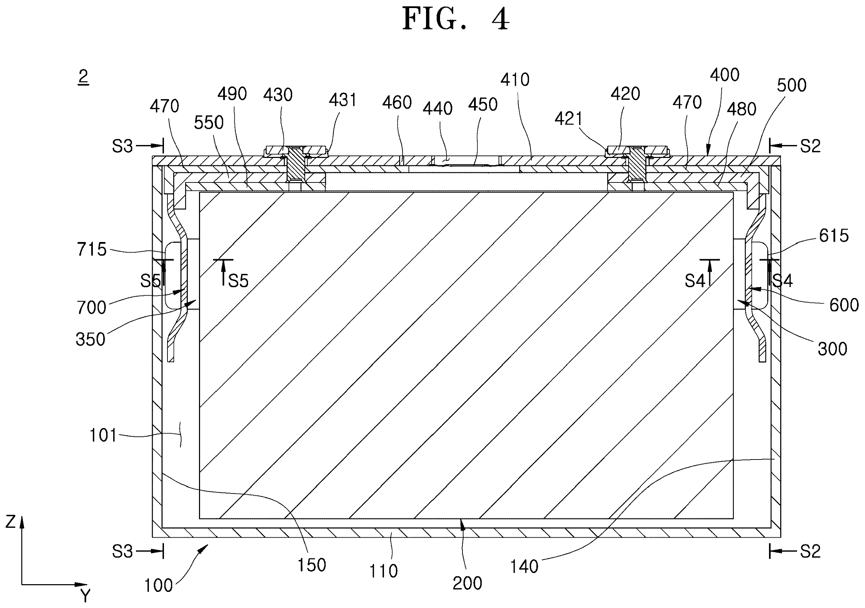

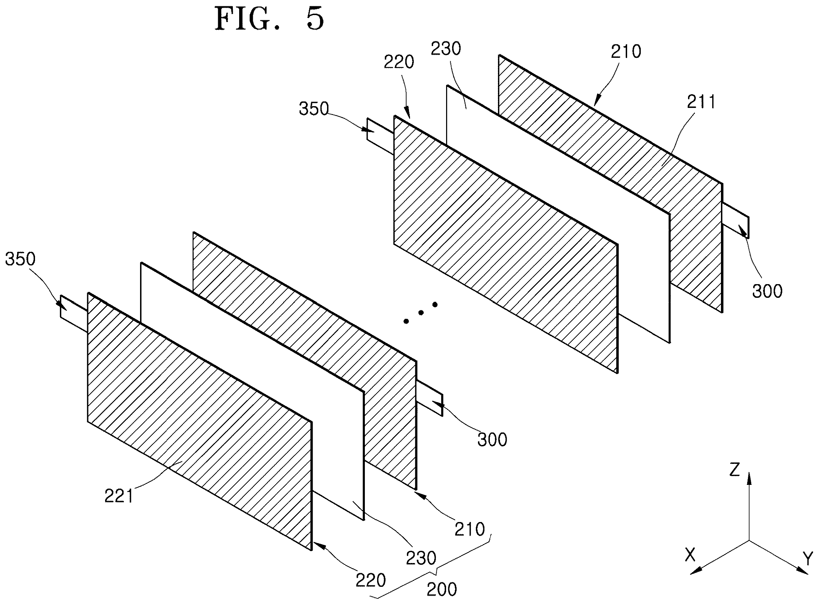

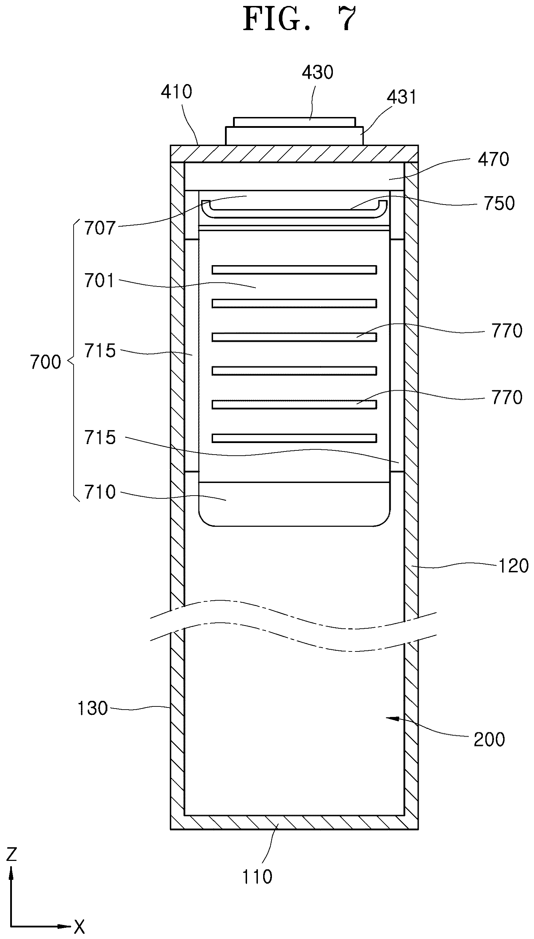

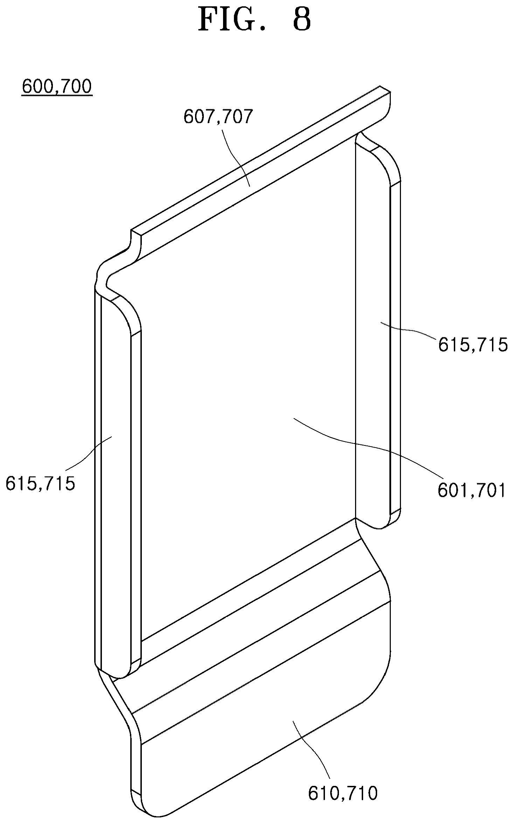

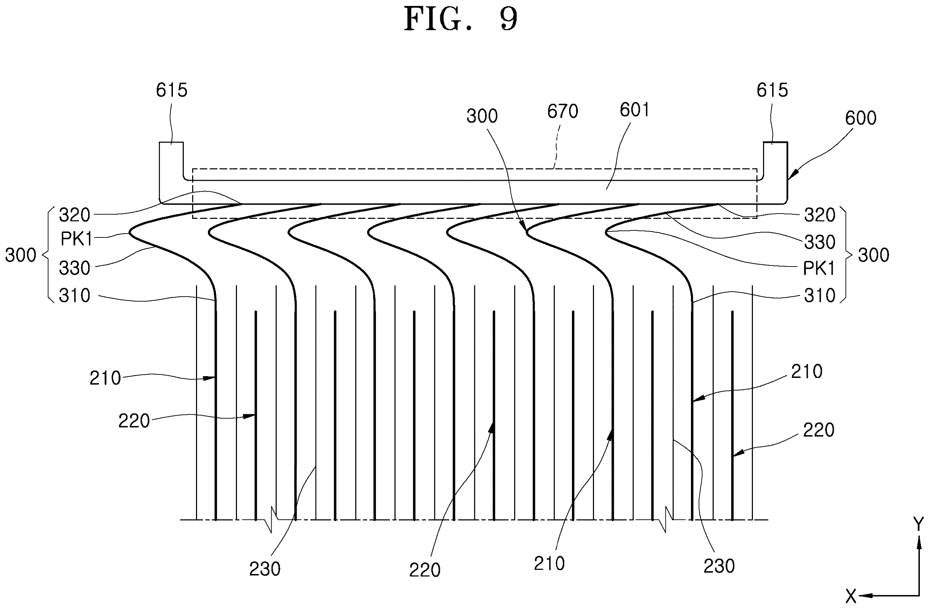

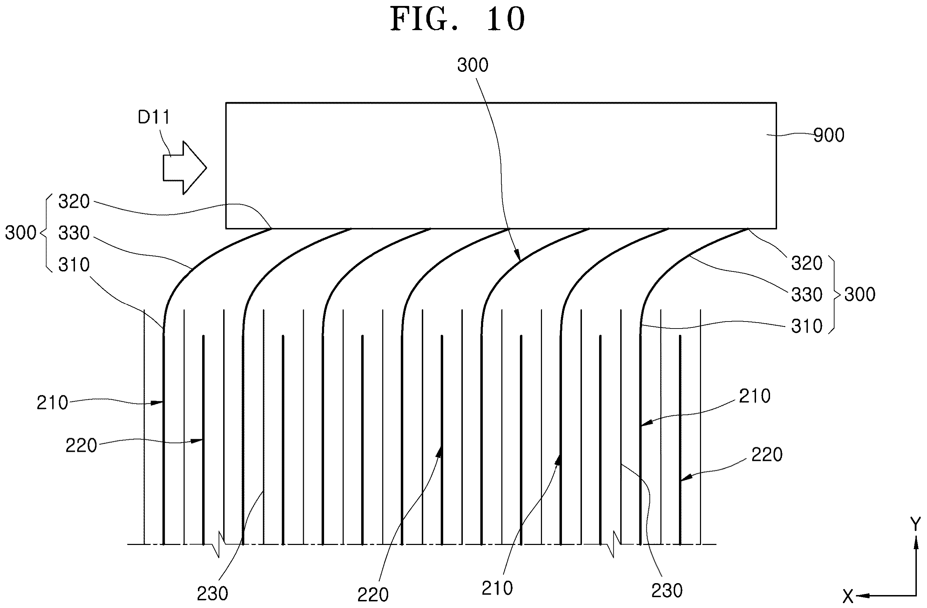

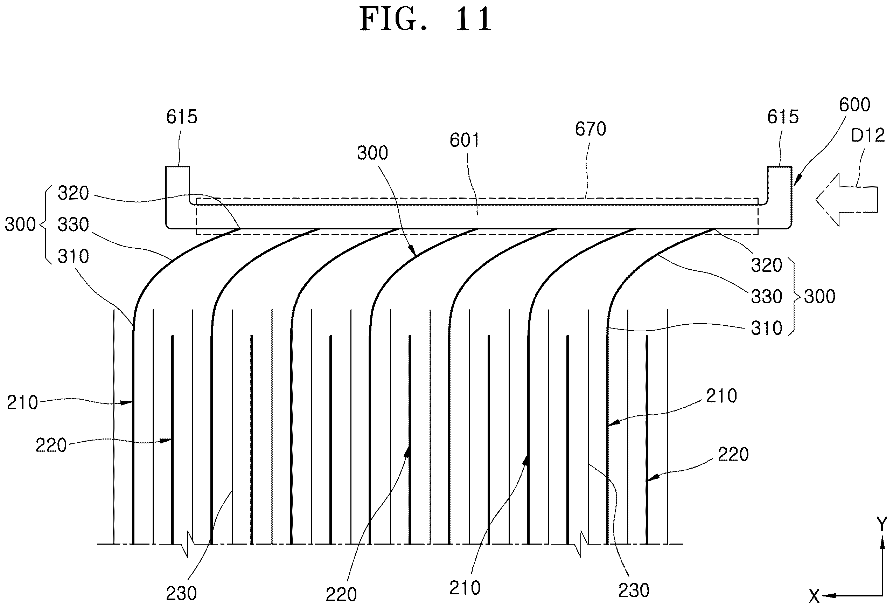

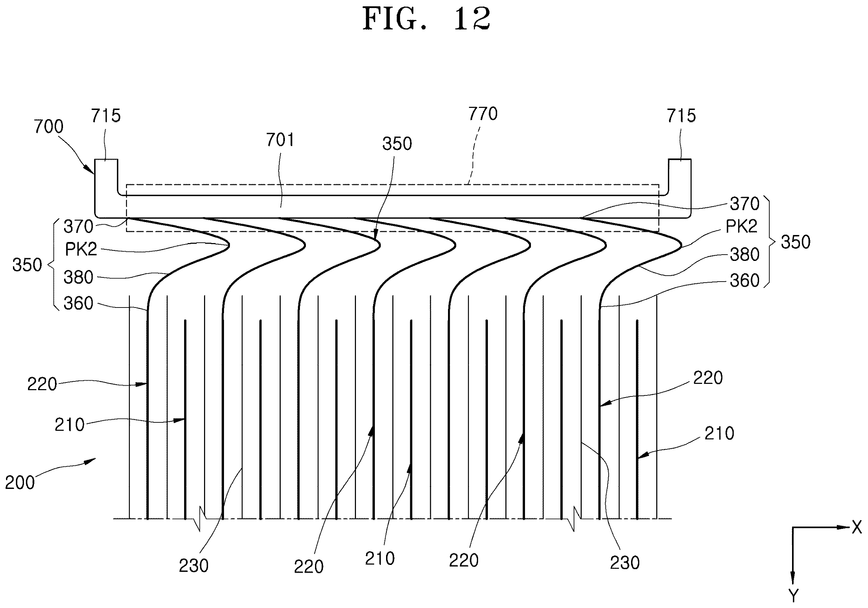

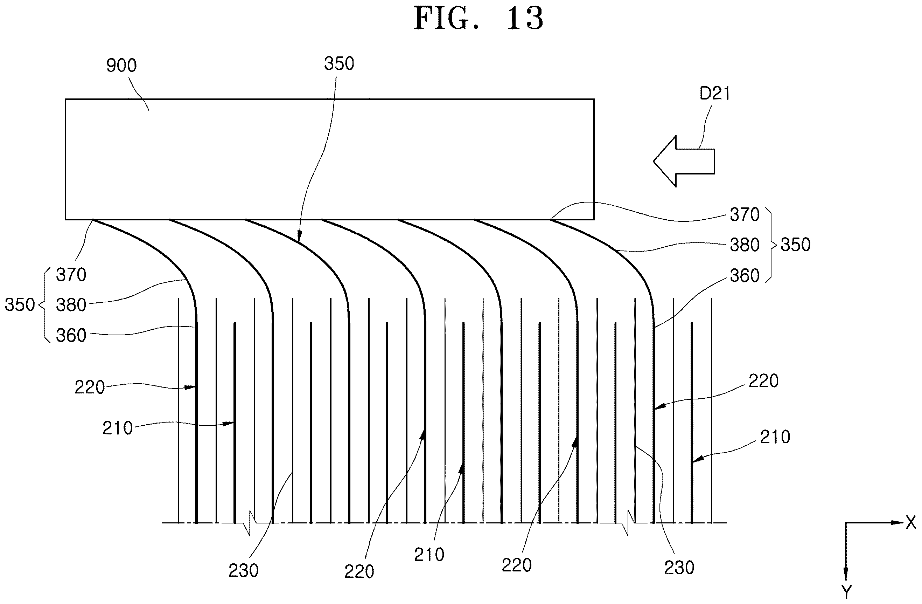

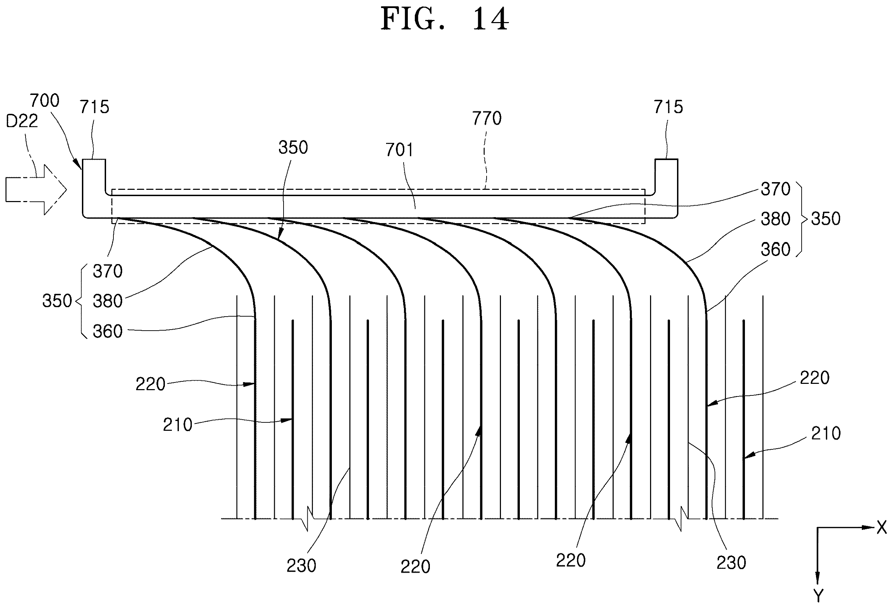

FIG. 2 is a perspective view schematically illustrating a configuration of a secondary battery according to one or more aspects of the present disclosure, FIG. 3 is an exploded perspective view schematically illustrating the configuration of the secondary battery according to one or more aspects of the present disclosure, FIG. 4 is a cross-sectional view taken along the line S1-S1 in FIG. 2, according to one or more aspects of the present disclosure. FIG. 5 is an exploded perspective view schematically illustrating a configuration of an electrode assembly according to one or more aspects of the present disclosure. FIG. 6 is a side view illustrating the inside of a case by cutting FIG. 4 along line S2-S2, according to one or more aspects of the present disclosure. FIG. 7 is a side view illustrating the inside of the case by cutting FIG. 4 along line S3-S3, according to one or more aspects of the present disclosure. FIG. 8 is an enlarged perspective view illustrating first and second collecting plates of FIG. 4, according to one or more aspects of the present disclosure. FIG. 9 is a cross-sectional view illustrating the electrode assembly, a plurality of first current collecting plates, and first electrode tabs of FIG. 4 cut along line S4-S4, according to one or more aspects of the present disclosure. FIG. 10 is a cross-sectional view illustrating a state in which the plurality of first electrode tabs are bent before the first current collecting plate and the plurality of first electrode tabs of FIG. 9 are welded to each other, according to one or more aspects of the present disclosure. FIG. 11 is a cross-sectional view illustrating a state in which the first current collecting plate is positioned to be biased with respect to the electrode assembly when the first current collecting plate and the plurality of first electrode tabs of FIG. 9 are welded, according to one or more aspects of the present disclosure. FIG. 12 is a cross-sectional view illustrating the electrode assembly, a plurality of second current collecting plates, and second electrode tabs of FIG. 4 cut along line S5-S5, FIG. 13 is a cross-sectional view illustrating a state in which the plurality of second electrode tabs are bent before the second current collecting plate and the plurality of second electrode tabs of FIG. 12 are welded to each other, according to one or more aspects of the present disclosure. FIG. 14 is a cross-sectional view illustrating a state in which the second current collecting plate is positioned to be biased with respect to the electrode assembly when the first current collecting plate and the plurality of first electrode tabs of FIG. 12 are welded, according to one or more aspects of the present disclosure.

Hereinafter, an example in which the secondary battery 2 is a prismatic lithium-ion secondary battery will be described. However, the present disclosure is not limited thereto, and the secondary battery may be a lithium polymer battery or cylindrical battery.

Referring to FIGS. 2 to 8, the secondary battery 2 according to one or more aspects includes a case 100, an electrode assembly 200, a cap assembly 400, current collecting plates 600 and 700, and a plurality of electrode tabs 300 and 350.

The case 100 may form an approximate exterior of the secondary battery 2 and accommodate the electrode assembly 200.

The case 100 according to one or more aspects may include a plurality of walls 110, 120, 130, 140, and 150 that define an internal space 101. The plurality of walls 110, 120, 130, 140, and 150 may include a bottom wall 110, a front wall 120, a rear wall 130, a first side wall 140, and a second side wall 150.

The bottom wall 110 may form a lower exterior of the case 100 (see, *e.g.,* FIG. 3). The bottom wall 110 according to one or more aspects may have a rectangular plate shape. The bottom wall 110 may be seated on a bottom surface of the housing body 11.

The front wall 120, the rear wall 130, the first side wall 140, and the second side wall 150 may form an exterior of the periphery of the case 100.

The front wall 120, the rear wall 130, the first side wall 140, and the second side wall 150 according to one or more aspects may each have plate shapes extending upward from edges of the bottom wall 110 (see, *e.g.,* FIG. 3). The front wall 120, the rear wall 130, the first side wall 140, and the second side wall 150 may be arranged to be around (e.g., surround) the space above the bottom wall 110. The front wall 120, the rear wall 130, the first side wall 140, and the second side wall 150 may be arranged to form a rectangular cross-sectional shape.

The front wall 120 and the rear wall 130 may be arranged to face each other in the width direction of the case 100 (e.g., the x-direction). The front wall 120 and the rear wall 130 may be arranged parallel to each other. Areas of the front wall 120 and the rear wall 130 may be the same.

The first side wall 140 and the second side wall 150 may be arranged to face each other in a longitudinal direction of the case 100 (*e.g*., the y-direction). The first side wall 140 may be located on one side in the longitudinal direction of the case 100, and the second side wall 150 may be located on the other side in the longitudinal direction of the case 100.

The first side wall 140 and the second side wall 150 may be arranged parallel to each other. Areas of the first side wall 140 and the second side wall 150 may be the same. The areas of the first side wall 140 and the second side wall 150 may be smaller than the areas of the front wall 120 and the rear wall 130.

The case 100 may further include an opening 160. The opening 160 according to one or more aspects may refer to a space defined by upper end portions of the front wall 120, the rear wall 130, the first side wall 140, and the second side wall 150. The opening 160 may interconnect the internal space 101 and an external space of the case 100.

Accordingly, the case 100 according to one or more aspects may have the shape of a rectangle with an open top.

A first direction described in more detail below may refer to a direction parallel to the Y-axis based on FIGS. 2 to 4. A second direction described in more detail below may refer to a direction parallel to the X-axis based on FIGS. 2 to 4. A third direction described in more detail below may refer to a direction parallel to the Z-axis based on FIGS. 2 to 4.

The electrode assembly 200 may function as a unit structure that performs charging and discharging operations of power in the secondary battery. The electrode assembly 200 may be accommodated in the internal space 101 of the case 100.

The electrode assembly 200 according to one or more aspects may include a first electrode 210, a second electrode 220 separated from the first electrode 210, and a separator 230 arranged between the first electrode 210 and the second electrode 220. A plurality of first electrodes 210, separators 230, and second electrodes 220 may be provided.

Hereinafter, an example in which the electrode assembly 200 has a stacked form in which the plurality of first electrodes 210, separators 230, and second electrodes 220 are sequentially stacked in the second direction will be described. However, the form of the electrode assembly 200 is not limited thereto, and may also be formed to have a form wound around a winding axis in a clockwise direction or counterclockwise direction in a state in which the first electrodes 210, the separators 230, and the second electrodes 220 are stacked.

The first electrode 210 may function as either a positive electrode or negative electrode of the electrode assembly 200. Hereinafter, the first electrode 210 will be described as the positive electrode of the electrode assembly 200. However, the first electrode 210 is not limited thereto and may also function as the negative electrode of the electrode assembly 200 when the second electrode 220 is the positive electrode.

The first electrode 210 according to one or more aspects may be formed to have a foil shape including a metal material such as aluminum or an aluminum alloy. The type (kind), size, shape, and/or the like of the first electrode 210 is not particularly limited as long as the first electrode 114 has conductivity (*e.g*., is a conductor) without causing a chemical change in the secondary battery. A cross-sectional shape of the first electrode 210 may be designed to have one or more suitable shapes in addition to the rectangular shape shown in FIG. 5.

A plurality of first electrodes 210 may be provided. The plurality of first electrodes 210 may be arranged between the front wall 120 and the rear wall 130 of the case 100 in the second direction. The number of first electrodes 210 may be designed to vary depending on the charging capacity, and/or the like of the secondary battery 2.

A first active material layer 211 may be applied on the first electrode 210. The first active material layer 211 may be applied on both surfaces (*e.g*., opposite surfaces) of the first electrode 210, or alternatively, may be applied on only one surface of the first electrode 210.

When the first electrode 210 functions as the positive electrode, the first active material layer 211 may include a positive electrode active material.

The positive electrode active material may be a compound capable of reversible intercalation and deintercalation of lithium (lithiated intercalation compound). For example, one or more of composite oxides of lithium and a metal selected from among cobalt, manganese, nickel, and/or a (*e.g*., any suitable) combination thereof may be used.

In one example, the positive electrode active material may include at least one of lithium-iron-phosphorus oxide (LiFePO₄, LFP), lithium-manganese-iron-phosphorus oxide (LiMnFePO₄, LMFP), and/or lithium-nickel-cobalt-manganese oxide (LiNiₓCo_{y}Mn_{z}O₂, NCM). Here, 0<x<1, 0<y<1, 0<z<1, and x+y+z=1 may be satisfied. The positive electrode active material may include only one of lithium-iron-phosphorus oxide (LiFePO₄, LFP), lithium-manganese-iron-phosphorus oxide (LiMnFePO₄, LMFP), and lithium-nickel-cobalt-manganese oxide (LiNiₓCo_{y}Mn_{z}O₂, NCM), and may include two or all of lithium-iron-phosphorus oxide (LiFePO₄, LFP), lithium-manganese-iron-phosphorus oxide (LiMnFePO₄, LMFP), and/or lithium-nickel-cobalt-manganese oxide (LiNiₓCo_{y}Mn_{z}O₂, NCM).

The first active material layer 211 may further include a positive electrode conductive material.

The positive electrode conductive material is used to impart conductivity to the first active material layer 211, and may be any material which does not cause a chemical change and is electronically conductive may be used. Examples of the positive electrode conductive material may include a carbon-based material, such as natural graphite, artificial graphite, carbon black, acetylene black, Ketjen black, carbon fibers, carbon nanofibers, carbon nanotubes, and/or the like, a metal-based material in the form of a metal powder or metal fiber containing copper, nickel, aluminum, silver, and/or the like a conductive polymer such as a polyphenylene derivative, and/or a (*e.g*., any suitable) mixture thereof.

The first active material layer 211 may further include a positive electrode binder.

The positive electrode binder serves to attach particles constituting the positive electrode active material to each other well, and may also serve to attach the positive electrode active material to the first electrode 210 well.

An example of the positive electrode binder may include a non-aqueous binder, an aqueous binder, a dry binder, and/or a (*e.g*., any suitable) combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, and/or a (*e.g*., any suitable) combination thereof.

The aqueous binder may be selected from among styrene-butadiene rubber, (meth)acrylated styrene-butadiene rubber, (meth)acrylonitrile-butadiene rubber, (meth)acrylic rubber, butyl rubber, a fluoroelastomer, polyethylene oxide, polyvinylpyrrolidone, polyepichlorohydrin, polyphosphazene, poly(meth)acrylonitrile, an ethylene propylene diene copolymer, polyvinyl pyridine, chlorosulfonated polyethylene, latex, polyester resin, (meth)acrylic resin, phenolic resin, epoxy resin, polyvinyl alcohol, and/or a (e.g., any suitable) combination thereof.

When the aqueous binder is used as the positive electrode binder, a cellulose-based compound may be further included to impart viscosity. This cellulose-based compound may be used by mixing one or more of carboxymethyl cellulose, hydroxypropyl methyl cellulose, methyl cellulose, or alkali metal salts thereof. Na, K, or Li may be used as the alkali metal.

The dry binder may be a polymeric material capable of being fiberized, for example, polytetrafluoroethylene, polyvinylidene fluoride, a polyvinylidene fluoride-hexafluoropropylene copolymer, polyethylene oxide, and/or a (*e.g*., any suitable) combination thereof.

The second electrode 220 may function as the other of the positive electrode or the negative electrode of the electrode assembly 200. Hereinafter, the second electrode 220 will be described as the negative electrode of the electrode assembly 200. However, the second electrode 220 is not limited thereto and may also function as the positive electrode of the electrode assembly 200 when the first electrode 210 is the negative electrode.

A plurality of second electrodes 220 may be provided. The plurality of second electrodes 220 may be arranged between the front wall 120 and the rear wall 130 of the case 100 in the second direction. The first electrodes 210 and the second electrodes 220 may be alternately arranged in the second direction. The second electrode 220 may be spaced and/or apart (e.g., spaced apart or separated) from the first electrode 210 by a set interval in the second direction.

The second electrode 220 according to one or more aspects may be formed to have a foil shape including a metal material such as copper, a copper alloy, nickel, or a nickel alloy. The type (kind), size, shape, and/or the like of the second electrode 220 is not particularly limited as long as the second electrode 220 has conductivity (*e.g*., is a conductor) without causing a chemical change in the secondary battery. A cross-sectional shape of the second electrode 220 may be designed to have one or more suitable shapes in addition to the rectangular shape shown in FIG. 5.

A second active material layer 221 may be applied on the second electrode 220. The second active material layer 221 may be applied on both surfaces (e.g., opposite surfaces) of the second electrode 220, or alternatively, may be applied on only one surface of the second electrode 220.

When the second electrode 220 functions as the negative electrode, the second active material layer 221 may include a negative electrode active material.

The negative electrode active material includes a material capable of reversibly intercalating/deintercalating lithium ions, lithium metal, an alloy of lithium and a metal, a material capable of doping and dedoping lithium, or a transition metal oxide.

The material capable of reversibly intercalating/deintercalating lithium ions may be a carbon-based negative electrode active material, for example, crystalline carbon, amorphous carbon, and/or a (e.g., any suitable) combination thereof. Examples of the crystalline carbon may include graphite such as amorphous, platelike, flaky, spherical, or fibrous natural graphite or artificial graphite, and examples of the amorphous carbon may include soft carbon or hard carbon, mesophase pitch carbide, calcined coke, and/or the like.

An alloy of lithium and a metal selected from among Na, K, Rb, Cs, Fr, Be, Mg, Ca, Sr, Si, Sb, Pb, In, Zn, Ba, Ra, Ge, Al, and Sn may be used as the alloy of lithium and a metal.

As the material capable of doping and dedoping lithium, a Si-based negative electrode active material or Sn-based negative electrode active material may be used. The Si-based negative electrode active material may include silicon, a silicon-carbon composite, SiOₓ (0<x≤2), a Si-Q alloy (where Q is selected from among alkali metals, alkaline earth metals, group 13 elements, group 14 elements (excluding Si), group 15 elements, group 16 elements, transition metals, rare earth elements, and/or a (*e.g.,* any suitable) combination thereof), and/or a (*e*.g., any suitable) combination thereof. The Sn-based negative electrode active material may include Sn, SnOₓ (where 0<x≤2, *e.g*., SnO₂), a Sn-based alloy, and/or a (*e.g*., any suitable) combination thereof.

The silicon-carbon composite may be a composite of silicon and amorphous carbon. According to one or more aspects, the silicon-carbon composite may be in the form of silicon particles whose surfaces are coated with amorphous carbon. For example, the silicon-carbon composite may include a secondary particle (a core) in which silicon primary particles are assembled and an amorphous carbon coating layer (a shell) located on the surface of the secondary particle. The amorphous carbon may also be located between the silicon primary particles so that, for example, the silicon primary particles may be coated with the amorphous carbon. The secondary particle may be dispersed in an amorphous carbon matrix.

The silicon-carbon composite may further include crystalline carbon. For example, the silicon-carbon composite may include a core including crystalline carbon and silicon particles and an amorphous carbon coating layer located on a surface of the core.

The Si-based negative electrode active material or Sn-based negative electrode active material may be used in combination with the carbon-based negative electrode active material.

The second active material layer 221 may further include a negative electrode conductive material and a negative electrode binder.

The negative electrode conductive material is used to impart conductivity to the second active material layer 221, and any material which does not cause a chemical change and is electronically conductive may be used. Examples of the negative electrode conductive material may include natural graphite, artificial graphite, carbon black, acetylene black, Ketjen black, carbon-based materials, such as carbon fibers, carbon nanofibers, carbon nanotubes, and/or the like, a metal-based material in the form of a metal powder or metal fiber including copper, nickel, aluminum, silver, and/or the like a conductive polymer such as a polyphenylene derivative, and/or a (*e.g*., any suitable) mixture thereof.

The negative electrode binder serves to attach particles constituting the negative electrode active material to each other well, and may also serve to attach the negative electrode active material to the second electrode 220 well.

An example of the negative electrode binder may include a non-aqueous binder, an aqueous binder, a dry binder, and/or a (e.g., any suitable) combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, and/or a (e.g., any suitable) combination thereof.

The aqueous binder may be selected from among styrene-butadiene rubber, (meth)acrylated styrene-butadiene rubber, (meth)acrylonitrile-butadiene rubber, (meth)acrylic rubber, butyl rubber, a fluoroelastomer, polyethylene oxide, polyvinylpyrrolidone, polyepichlorohydrin, polyphosphazene, poly(meth)acrylonitrile, an ethylene propylene diene copolymer, polyvinyl pyridine, chlorosulfonated polyethylene, latex, polyester resin, (meth)acrylic resin, phenolic resin, epoxy resin, polyvinyl alcohol, and/or a (e.g., any suitable) combination thereof.

When the aqueous binder is used as the negative electrode binder, a cellulose-based compound may be further included to impart viscosity. This cellulose-based compound may be used by mixing one or more of carboxymethyl cellulose, hydroxypropyl methyl cellulose, methyl cellulose, or alkali metal salts thereof. Na, K, or Li may be used as the alkali metal.

The dry binder may be a polymeric material capable of being fiberized, for example, polytetrafluoroethylene, polyvinylidene fluoride, a polyvinylidene fluoride-hexafluoropropylene copolymer, polyethylene oxide, and/or a (e.g., any suitable) combination thereof.

The separator 230 may be arranged between the first electrode 210 and the second electrode 220. The separator 230 may perform a function of preventing or reducing the likelihood of a short circuit between the first electrode 210 and the second electrode 220 while allowing lithium ions to move between the first electrode 210 and the second electrode 220.

The separator 230 may be arranged to entirely cover a surface region of the electrode assembly 200. Accordingly, the separator 230 may prevent or reduce the likelihood of the first electrode 210 and the second electrode 220 being directly exposed to the outside of the electrode assembly 200.

As the separator 230, polyethylene, polypropylene, polyvinylidene fluoride, or a multilayer film of two or more layers thereof may be used, and a mixed multilayer film such as a polyethylene/polypropylene two-layer separator, a polyethylene/polypropylene/polyethylene three-layer separator, a polypropylene/polyethylene/polypropylene three-layer separator, and/or the like may be used.

The separator 230 may include a porous substrate and a coating layer containing an organic material, an inorganic material, and/or a (e.g., any suitable) combination thereof located on one surface or both surfaces (e.g., opposite surfaces) of the porous substrate.

The porous substrate may be a polymer film formed of any one polymer selected from among polyolefins such as polyethylene and polypropylene, polyesters such as polyethylene terephthalate and polybutylene terephthalate, polyacetal, polyamide, polyimide, polycarbonate, polyether ketone, polyaryl ether ketone, polyetherimide, polyamideimide, polybenzimidazole, polyether sulfone, polyphenylene oxide, a cyclic olefin copolymer, polyphenylene sulfide, polyethylene naphthalate, glass fiber, and polytetrafluoroethylene (e.g., Teflon), or a copolymer or mixture of two or more thereof.

The organic material may include a polyvinylidene fluoride-based polymer or a (meth)acryl-based polymer.

The inorganic material may include, but the present disclosure is not limited thereto, inorganic particles selected from among Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and/or a (*e.g.,* any suitable) combination thereof.

The organic material and the inorganic material may be present as a mixture in a single coating layer or may be present in a form in which a coating layer including an organic material and a coating layer including an inorganic material are stacked.

A plurality of electrode tabs 300 and 350 may include a plurality of first electrode tabs 300 and a plurality of second electrode tabs 350. The first electrode tab 300 may be connected to the first electrode 210. The first electrode 210 and the first electrode tab 300 may be provided in pluralities that correspond one-to-one.

The plurality of first electrode tabs 300 may be arranged to overlap in a thickness direction of the electrode assembly 200. The thickness direction of the electrode assembly 200 is a direction parallel to the X-axis based on FIGS. 5 and 9, and may be the same as the second direction.

In one or more aspects of the present disclosure different from one or more aspects illustrated in FIG. 5, a plurality of first electrode tabs 300 may be connected to one first electrode 210. In such aspects, the plurality of first electrode tabs 300 may be arranged to be spaced and/or apart (e.g., spaced apart or separated) from each other in the third direction (e.g., a direction parallel to the Z-axis).

As the first electrode 210 may be the positive electrode, the first electrode tab 300 may function as a positive electrode tab of the secondary battery 2. However, the first electrode tab 300 is not limited thereto, and it may function as a negative electrode tab of the secondary battery 2 if (e.g., when) the first electrode 210 is the negative electrode.

Based on FIG. 5, the first electrode tab 300 may protrude parallel to the positive (+) direction of the Y-axis from the electrode assembly 200. For example, the first electrode tab 300 may extend from the electrode assembly 200 toward the first side wall 140 inside the case 100.

The first electrode tab 300 may be formed by notching an uncoated portion of the first electrode 210 to which the first active material layer 211 is not applied.

As shown, for example, in FIG. 9, each of the first electrode tabs 300 includes a root portion 310 connected to the electrode assembly 200, a weld portion 320 provided at an end of the first electrode tab 300 spaced and/or apart (e.g., spaced apart or separated) from the electrode assembly 200, and an intermediate portion 330 connecting the root portion 310 and the weld portion 320. The root portion 310, the intermediate portion 330, and the weld portion 320 may be integrally formed.

The second electrode tab 350 may be connected to the second electrode 220 as shown, for example, in FIG. 5. The second electrode 220 and the second electrode tab 350 may be provided in pluralities that correspond one-to-one.

The plurality of second electrode tabs 350 may be arranged to overlap in the thickness direction of the electrode assembly 200. The thickness direction of the electrode assembly 200 is a direction parallel to the X-axis based on FIGS. 5 and 12, and may be the same as the second direction.

In one or more aspects of the present disclosure different from one or more aspects illustrated in FIG. 5, a plurality of second electrode tabs 350 may be connected to one second electrode 220. In such aspects, the plurality of second electrode tabs 350 may be arranged to be spaced and/or apart (e.g., spaced apart or separated) from each other in the third direction.

As the second electrode 220 may be the negative electrode, the second electrode tab 350 may function as a negative electrode tab of the secondary battery 2. However, the second electrode tab 350 is not limited thereto, and may function as a positive electrode tab of the secondary battery 2 if (e.g., when) the second electrode 220 is the positive electrode.

Based on FIG. 5, the second electrode tab 350 may protrude parallel to the negative (-) direction of the Y-axis from the electrode assembly 200. For example, the second electrode tab 350 may extend from the electrode assembly 200 toward the second side wall 150 inside the case 100.

The second electrode tab 350 may be formed by notching an uncoated portion of the second electrode 220 to which the second active material layer 221 is not applied.

As shown, for example, in FIG. 12, each of the second electrode tabs 350 includes a root portion 360 connected to the electrode assembly 200, a weld portion 370 provided at an end of the second electrode tab 350 spaced and/or apart (e.g., spaced apart or separated) from the electrode assembly 200, and an intermediate portion 380 connecting the root portion 360 and the weld portion 370. The root portion 360, the intermediate portion 380, and the weld portion 370 may be integrally formed.

The cap assembly 400 includes a cap plate 410 for closing the case 100, and terminals 420 and 430 supported by the cap plate 410 (see, *e.g.,* FIG. 3). The cap plate 410 closes the opening 160 that is open at the upper side of the case 100.

The terminals 420 and 430 may include a first terminal 420 and a second terminal 430. The first terminal 420 may be installed on one side of the cap plate 410 in the longitudinal direction, and the second terminal 430 may be installed on the other side of the cap plate 410 in the longitudinal direction. The first terminal 420 may be located closer to the first side wall 140 than to the second side wall 150, and the second terminal 430 may be located closer to the second side wall 150 than to the first side wall 140.

The cap plate 410 may be arranged to face the electrode assembly 200 in the third direction. For example, the cap plate 410 may be arranged at a position spaced a set or predetermined distance apart from the electrode assembly 200 in the third direction. The cap plate 410 may be arranged parallel to the bottom wall 110 of the case 100.

A lower end portion of the first terminal 420 according to one or more aspects may be inserted into the cap plate 410. An upper end portion of the first terminal 420 may protrude outward from the cap plate 410. FIG. 3 illustrates an example in which the first terminal 420 has a rectangular cross-sectional shape, but the cross-sectional shape of the first terminal 420 is not limited thereto, and it may be designed to have one or more suitable shapes such as a circular shape, an oval shape, a polygonal shape, and/or the like. The first terminal 420 may be formed of an electrically conductive material such as aluminum, nickel, copper, and/or the like.

A first gasket 421 may be installed between the cap plate 410 and the first terminal 420. The first gasket 421 may electrically insulate the cap plate 410 and the first terminal 420 and prevent or reduce the likelihood of moisture or foreign substances from entering between the cap plate 410 and the first terminal 420.

The first gasket 421 according to one or more aspects may be formed of an insulating material such as polyethylene (PE), polypropylene (PP), polyethylene terephthalate (PET) rubber, and/or the like. The first gasket 421 may be fixed between the cap plate 410 and the first terminal 420 by pressing, injection, adhesion, and/or the like.

The second terminal 430 may protrude outward from the cap plate 410 at a position spaced and/or apart (e.g., spaced apart or separated) from the first terminal 420. The second terminal 430 may be electrically connected to the second electrode 220. Because the second electrode 220 according to one or more aspects functions as a negative electrode, the second terminal 430 may be a negative electrode terminal of the secondary battery 2.

A lower end portion of the second terminal 430 according to one or more aspects may be inserted into the cap plate 410. An upper end portion of the second terminal 430 may protrude to the outside of the cap plate 410. FIG. 3 illustrates an example in which the second terminal 430 has a rectangular cross-sectional shape, but the cross-sectional shape of the second terminal 430 is not limited thereto, and may be designed to have one or more suitable shapes such as a circular shape, an oval shape, a polygonal shape, and/or the like. The second terminal 430 may be formed of an electrically conductive material such as aluminum, nickel, copper, and/or the like.

A second gasket 431 may be installed between the cap plate 410 and the second terminal 430. The second gasket 431 may electrically insulate the cap plate 410 and the second terminal 430 and prevent or reduce the likelihood of moisture or foreign substances from entering between the cap plate 410 and the second terminal 430.

The second gasket 431 according to one or more aspects may be formed of an insulating material such as polyethylene (PE), polypropylene (PP), polyethylene terephthalate (PET) rubber, and/or the like. The second gasket 431 may be fixed between the cap plate 410 and the second terminal 430 by pressing, injection, adhesion, and/or the like.

The cap assembly 400 may further include a vent hole 440 and a cell vent 450.

The vent hole 440 may be formed to have a hole shape which vertically passes through both sides (e.g., passes through the entire thickness) of the cap plate 410 in the third direction. The vent hole 440 may function as a configuration providing a path through which flames, gas, smoke, and/or the like formed in the case 100 may be discharged to the outside of the case 100 if (e.g., when) thermal runaway of the secondary battery 2 occurs due to an overcurrent and/or the like. The vent hole 440 may be arranged between the first terminal 420 and the second terminal 430. A cross-sectional shape of the vent hole 440 may be designed to have one or more suitable shapes such as an oval shape, a circular shape, a polygonal shape, and/or the like.

The cell vent 450 is installed in the vent hole 440 and may be opened and closed in response to a change in internal pressure of the case 100. For example, the cell vent 450 may prevent or reduce the likelihood of an electrolyte and/or the like in the case 100 from leaking out of the case 100 or moisture, foreign substances, and/or the like from entering the case 100 by closing the vent hole 440 when the secondary battery 2 is operating normally. The cell vent 450 may guide flames, gas, smoke, and/or the like formed in the case 100 and may discharge them to the outside of the case 100 by opening the vent hole 440 if (e.g., when) thermal runaway of the secondary battery 2 occurs.

The cell vent 450 according to one or more aspects may be formed to have a substantially plate shape. The cell vent 450 may be fixed to the cap plate 410 by one or more suitable types (kinds) of coupling methods such as welding, bolting, fitting, and/or the like. The cell vent 450 may be arranged in the vent hole 440, or arranged to face the vent hole 440 at an upper or lower side of the cap plate 410.

A thickness of the cell vent 450 parallel to the third direction may be smaller than a thickness of the cap plate 410. Accordingly, the cell vent 450 may easily rupture or break if (e.g., when) the internal pressure of the case 100 increases. The cell vent 450 may include a notch formed concavely toward the inside of the cell vent 450 to preferentially break if (e.g., when) the internal pressure of the case 100 increases.

The cap assembly 400 according to one or more aspects may further include an electrolyte inlet 460 formed to pass through the cap plate 410 and in which a sealing stopper may be installed. The electrolyte inlet 460 may be arranged to be spaced a set or predetermined distance apart from the vent hole 440. The electrolyte inlet 460 may be arranged between the first terminal 420 and the second terminal 430.

The cap assembly 400 according to one or more aspects may further include an insulating plate 470.

The insulating plate 470 may be arranged between the cap plate 410 and the electrode assembly 200. The insulating plate 470 may prevent or reduce direct contact between the cap plate 410 and the electrode assembly 200 to insulate the cap plate 410 and the electrode assembly 200.

The insulating plate 470 according to one or more aspects may be arranged to face the electrode assembly 200 in the case 100 in the third direction. For example, the cap plate 410, the insulating plate 470, and the electrode assembly 200 may be sequentially arranged in the third direction. The insulating plate 470 may be formed of an insulating material such as polyethylene (PE), polypropylene (PP), polyethylene terephthalate (PET) rubber, and/or the like.

The secondary battery 2 may further include a first current collector insulation plate 480 interposed between a first current collector 500 and the electrode assembly 200, and a second current collector insulation plate 490 interposed between a second current collector 550 and the electrode assembly 200.

The current collecting plates 600 and 700 are located in the internal space 101 of the case 100 and electrically connected to the terminals 420 and 430. The secondary battery 2 may further include current collectors 500 and 550 connecting the terminals 420 and 430 and the current collecting plates 600 and 700.

The current collecting plates 600 and 700 may include a first current collecting plate 600 and a second current collecting plate 700. The current collectors 500 and 550 may include a first current collector 500 connecting the first current collecting plate 600 and the first terminal 420, and a second current collector 550 connecting the second current collecting plate 700 and the second terminal 430.

The first current collecting plate 600 and the first terminal 420 may be electrically connected through the first current collector 500, and the second current collecting plate 700 and the second terminal 430 may be electrically connected through the second current collector 550.

The first side wall 140 and the second side wall 150 of the case 100 may be arranged to face each other. The first current collecting plate 600 may be located between the electrode assembly 200 and the first side wall 140 in the internal space 101 of the case 100. The second current collecting plate 700 may be located between the electrode assembly 200 and the second side wall 150 in the internal space 101.

Referring to FIGS. 4 to 14, the first current collecting plate 600 may extend in the third direction. As shown, for example, in FIGS. 6 and 8, the first current collecting plate 600 may include a flat portion 601, a current collector connecting portion 607, a reinforcing rib portion 615, and a longitudinal rib portion 610.

The weld portion 320 of the first electrode tab 300 may be welded to the flat portion 601 of the first current collecting plate 600 (see, *e.g.,* FIG. 9). The flat portion 601 may have a flat plate shape normal (e.g., perpendicular) to the first direction. The weld portion 320 of the first electrode tab 300 may be located between the electrode assembly 200 and the first current collecting plate 600, and may be welded to a side surface of the first current collecting plate 600 facing (e.g., opposite to) the electrode assembly 200.

For example, the weld portion 320 may be welded to the flat portion 601 by laser welding in which the flat portion 601 is irradiated with laser.

The first current collecting plate 600 may further include a plurality of welding line portions 670 formed on the flat portion 601 by welding (see, *e.g.,* FIGS. 6 and 9). The plurality of welding line portions 670 may extend in a width direction of the first current collecting plate 600 and may be arranged to be spaced and/or apart (e.g., spaced apart or separated) from each other in a longitudinal direction of the first current collecting plate 600. The width direction of the first current collecting plate 600 may be the same as the second direction, and the longitudinal direction of the first current collecting plate 600 may be the same as the third direction.

The first current collector 500 and the first current collecting plate 600 may be joined by welding. For example, an end portion close to the first side wall 140 of the first current collector 500 and the current collector connecting portion 607 of the first current collecting plate 600 may be joined by laser welding.

The first current collecting plate 600 may further include a current collector welding line portion 650 formed on the current collector connecting portion 607 by welding and extending in the width direction of the first current collecting plate 600 (*see, e.g.,* FIG. 6). For example, the current collector connecting portion 607 may be provided at an upper end portion of the first current collecting plate 600.

The reinforcing rib portion 615 may be formed to reinforce the rigidity of the first current collecting plate 600. Bending or twisting in a direction in which the length of the first current collecting plate 600 is shortened may be suppressed or reduced by the reinforcing rib portion 615.

The reinforcing rib portion 615 may be bent and protrude from an end of the flat portion 601 in the width direction and extend parallel to the longitudinal direction of the flat portion 601. The reinforcing rib portion 615 may protrude toward the first side wall 140. The reinforcing rib portion 615 may be provided as a pair at both ends of the flat portion 601 in the width direction.

The longitudinal rib portion 610 may be formed to reinforce the rigidity of the first current collecting plate 600. Bending or twisting in a direction in which the width of the first current collecting plate 600 becomes smaller may be suppressed or reduced by the longitudinal rib portion 610. The longitudinal rib portion 610 may protrude from a lower end of the first current collecting plate 600 toward the first side wall 140 in a stepped manner.

Referring to FIGS. 4 to 14, the second current collecting plate 700 may extend in the third direction. As shown, for example, in FIGS. 7 and 8, the second current collecting plate 700 may include a flat portion 701, a current collector connecting portion 707, a reinforcing rib portion 715, and a longitudinal rib portion 710.

The weld portion 370 of the second electrode tab 350 may be welded to the flat portion 701 of the second current collecting plate 700 (see, *e.g.,* FIG. 12). The flat portion 701 may have a flat plate shape normal (e.g., perpendicular) to the first direction. The weld portion 370 of the second electrode tab 350 may be located between the electrode assembly 200 and the second current collecting plate 700, and may be welded to a side surface of the second current collecting plate 700 facing (e.g., opposite to) the electrode assembly 200.

For example, the weld portion 370 may be welded to the flat portion 701 by laser welding in which the flat portion 701 is irradiated with laser.

The second current collecting plate 700 may further include a plurality of welding line portions 770 formed on the flat portion 701 by welding (see, *e.g.,* FIGS. 7 and 12). The plurality of welding line portions 770 may extend in a width direction of the second current collecting plate 700 and may be arranged to be spaced and/or apart (e.g., spaced apart or separated) from each other in a longitudinal direction of the second current collecting plate 700. The width direction of the second current collecting plate 700 may be the same as the second direction, and the longitudinal direction of the second current collecting plate 700 may be the same as the third direction.

The second current collector 550 and the second current collecting plate 700 may be joined by welding. For example, an end portion close to the second side wall 150 of the second current collector 550 and the current collector connecting portion 707 of the second current collecting plate 700 may be joined by laser welding.

The second current collecting plate 700 may further include a current collector welding line portion 750 formed on the current collector connecting portion 707 by welding and extending in the width direction of the second current collecting plate 700 (see, *e.g.,* FIG. 7). For example, the current collector connecting portion 707 may be provided at an upper end portion of the second current collecting plate 700.

The reinforcing rib portion 715 may be formed to reinforce the rigidity of the second current collecting plate 700. Bending or twisting in a direction in which the length of the second current collecting plate 700 is shortened may be suppressed or reduced by the reinforcing rib portion 715.

The reinforcing rib portion 715 may be bent and protrude from an end of the flat portion 701 in the width direction and extend parallel to the longitudinal direction of the flat portion 701. The reinforcing rib portion 715 may protrude toward the second side wall 150. The reinforcing rib portions 715 may be provided as a pair at both ends of the flat portion 701 in the width direction.

The longitudinal rib portion 710 may be formed to reinforce the rigidity of the second current collecting plate 700. Bending or twisting in a direction in which the width of the second current collecting plate 700 becomes smaller may be suppressed or reduced by the longitudinal rib portion 710. The longitudinal rib portion 710 may protrude from a lower end of the second current collecting plate 700 toward the second side wall 150 in a stepped manner.

Referring to FIG. 9, each of the weld portions 320 of the plurality of first electrode tabs 300 is positioned to be biased to one side relative to the position of the root portion 310. The weld portion 320 may be positioned to be biased to one side in the width direction of the first current collecting plate 600 relative to the position of the root portion 310. Referring to FIG. 9, the weld portion 320 may be positioned to be biased (e.g., offset) in a negative X-axis direction relative to the position of the root portion 310. In some aspects, a respective welding contact in which a weld portion 320 contacts the first current collecting plate 600 is positioned - relative to the position of the root portion 310 - with a negative X-axis direction offset. From a respective welding contact, the corresponding weld portion 320 extends along positive X-axis direction towards a corresponding peak point PK1. From a respective peak point PK1, the corresponding intermediate portion 330 extends along negative X-axis direction towards a corresponding root portion 310.

Each of the intermediate portions 330 of the plurality of first electrode tabs 300 has a peak point PK1 that is positioned to be biased to the opposite side of the one side to which the weld portion 320 is positioned to be biased relative to the position of the root portion 310. The peak point PK1 may be positioned to be biased to the opposite side of the one side in the width direction of the first current collecting plate 600 relative to the position of the root portion 310. Referring to FIG. 9, the peak point PK1 may be positioned to be biased (e.g., offset) in a positive X-axis direction relative to the position of the root portion 310. In some aspects, a respective peak point PK1 caused by a bending of the intermediate portion 330 is positioned - relative to the position of the root portion 310 - with a positive X-axis direction offset. With respect to the x-axis position, a respective peak point PK1 is disposed on one side of corresponding the root portion 310 (or the first electrode 210) and the welding contact is disposed on the opposite side of corresponding the root portion 310 (or the first electrode 210). With respect to the x-axis position, a position of a respective root portion 310 (or the first electrode 210) is disposed between a position of the corresponding peak point PK1 and a position of the corresponding welding contact.

The first current collecting plate 600 may be positioned not to be biased relative to the electrode assembly 200. In one or more aspects, the first current collecting plate 600 may be positioned not to be biased (e.g., not to be offset) to one side of the electrode assembly 200 in the thickness direction of the electrode assembly 200. Referring to FIG. 9, for example, a coordinate value of a center point of a thickness of the electrode assembly 200 in the X-axis direction in the internal space 101 of the case 100 may be the same as a coordinate value of a center point of a width of the first current collecting plate 600. For example, the central line and/or axis of the first current collecting plate 600 along the third direction *(i.e.,* extending in a direction parallel to the Z-axis) is aligned with a central line and/or axis of the electrode assembly 200 along the third direction.

Referring to FIG. 12, each of the weld portions 370 of the plurality of second electrode tabs 350 is positioned to be biased to one side relative to the position of the root portion 360. The weld portion 370 may be positioned to be biased to one side in the width direction of the second current collecting plate 700 relative to the position of the root portion 360. Referring to FIG. 12, the weld portion 370 may be positioned to be biased (e.g., offset) in the negative X-axis direction relative to the position of the root portion 360. In some aspects, a respective welding contact in which a weld portion 370 contacts the first current collecting plate 700 is positioned - relative to the position of the root portion 360 - with a positive X-axis direction offset. From a respective welding contact, the corresponding weld portion 370 extends along positive X-axis direction towards a corresponding peak point PK2. From a respective peak point PK2, the corresponding intermediate portion 380 extends along negative X-axis direction towards a corresponding root portion 360.

Each of the intermediate portions 380 of the plurality of second electrode tabs 350 has a peak point PK2 that is positioned to be biased to the opposite side of the one side to which the weld portion 370 is positioned to be biased relative to the position of the root portion 360. The peak point PK2 may be positioned to be biased to the opposite side of the one side in the width direction of the second current collecting plate 700 relative to the position of the root portion 360. Referring to FIG. 12, the peak point PK2 may be positioned to be biased (e.g., offset) in a positive X-axis direction relative to the position of the root portion 360. In some aspects, a respective peak point PK2 caused by a bending of the intermediate portion 380 is positioned - relative to the position of the root portion 360 - with a positive X-axis direction offset. With respect to the x-axis position, a respective peak point PK2 is disposed on one side of corresponding the root portion 360 (or the second electrode 220) and the welding contact is disposed on the same side of corresponding the root portion 360 (or the second electrode 220). With respect to the x-axis position, a position of a respective welding contact is disposed between a position of the corresponding peak point PK2 and a position of the corresponding root portion 360 (or the second electrode 220).

The second current collecting plate 700 may be positioned not to be biased relative to the electrode assembly 200. In one or more aspects, the second current collecting plate 700 may be positioned not to be biased (e.g., not to be offset) to one side of the electrode assembly 200 in the thickness direction of the electrode assembly 200. Referring to FIG. 12, for example, a coordinate value of a center point of a thickness of the electrode assembly 200 in the X-axis direction in the internal space 101 of the case 100 may be the same as a coordinate value of a center point of a width of the second current collecting plate 700. For example, the central line and/or axis of the second current collecting plate 700 along the third direction *(i.e.,* extending in a direction parallel to the Z-axis) is aligned with a central line and/or axis of the electrode assembly 200 along the third direction.

In the secondary battery 2 according to one or more aspects of the present disclosure, all of the plurality of electrode tabs 300 and 350 protruding from the electrode assembly 200 may be welded to the current collecting plates 600 and 700. Therefore, electrical resistance between the electrode assembly 200 and the current collecting plates 600 and 700 may be reduced, thereby improving charging/discharging performance.

In the secondary battery 2 according to one or more aspects of the present disclosure, the electrode tabs are securely welded, unlike related secondary batteries in which the electrode tabs are not welded. As such, there is no need to form an excessive number of electrode tabs in the electrode assembly 200 and there is no need to form an excessively (or substantially) long current collecting plate, and thus the production costs of the secondary battery 2 and the battery pack including the secondary battery 2 are reduced.

Hereinafter, a secondary battery manufacturing method according to one or more aspects of the present disclosure is described. Referring to FIGS. 3, 4, and 9 to 14, the secondary battery manufacturing method includes an operation S100 of providing (e.g., supplying) an electrode assembly and an electrode tab, an operation S200 of bending the electrode tab, an operation S300 of biasing (e.g., moving, e.g., offsetting) a current collecting plate, an operation S400 of welding the electrode tab, and an operation S500 of repositioning a current collecting plate.

The operation S100 of providing the electrode assembly and electrode tab is the operation of providing an electrode assembly 200 and a plurality of electrode tabs 300 and 350 protruding from the electrode assembly 200. The plurality of electrode tabs 300 and 350 may include a plurality of first electrode tabs 300 and a plurality of second electrode tabs 350. In the description of the secondary battery 2 according to one or more aspects of the present disclosure, the electrode assembly 200, the plurality of first electrode tabs 300, and the plurality of second electrode tabs 350 have already been described, and thus a redundant description thereof may not be provided.

The operation S200 of bending the electrode tab is an operation of bending the plurality of electrode tabs 300 and 350 so that the plurality of electrode tabs 300 and 350 lie in substantially the same direction with respect to the electrode assembly 200. The operation S200 of bending the electrode tab may include an operation S210 of bending a first electrode tab 300 (e.g., the plurality of first electrode tabs 300) and an operation S220 of bending a second electrode tab 350 (e.g., the plurality of second electrode tabs 350).

Referring to FIGS. 5 and 10, the operation S210 of bending the first electrode tab may include an operation in which a worker fixes the electrode assembly 200 and pushes the plurality of first electrode tabs 300 protruding from the electrode assembly 200 in the first direction and overlapping in the second direction in a direction D11 parallel to the second direction using a block 900.

Accordingly, the positions of the weld portions 320 of the plurality of first electrode tabs 300 may be biased (e.g., bend) in the negative (-) X-axis direction relative to the position of the root portion 310. However, the position of the intermediate portion 330 may be biased (e.g., offset) in the negative (-) X-axis direction more than the position of the root portion 310, and may be biased in the positive (+) X-axis direction more than the position of the weld portion 320.

Referring to FIGS. 5 and 13, the operation S220 of bending the second electrode tab may include an operation in which a worker fixes the electrode assembly 200 and pushes the plurality of second electrode tabs 350 protruding from the electrode assembly 200 in the first direction and overlapping in the second direction in a direction D21 parallel to the second direction using the block 900.

Accordingly, the positions of the weld portions 370 of the plurality of second electrode tabs 350 may be biased (e.g., bend) in the negative (-) X-axis direction relative to the position of the root portion 360. However, the position of the intermediate portion 380 may be biased (e.g., offset) in the negative (-) X-axis direction more than the position of the root portion 360, and may be biased in the positive (+) X-axis direction more than the position of the weld portion 370.

The block 900 may be an example of a part for laying and pushing the first electrode tab 300 and the second electrode tab 350 protruding from the electrode assembly 200, and a tool different from the block 900 may be used.

In the operation S300 of biasing the current collecting plate, the current collecting plates 600 and 700 are biased (e.g., offset) in a direction in which the plurality of electrode tabs 300 and 350 are bent with respect to the electrode assembly 200 so that the current collecting plates 600 and 700 come into contact with the plurality of electrode tabs 300 and 350. The operation S300 of biasing the current collecting plate may include an operation S310 of biasing a first current collecting plate 600 and an operation S320 of biasing a second current collecting plate 700.

Referring to FIGS. 10 and 11, the operation S310 of biasing the first current collecting plate may include an operation of removing the block 900 in a state in which the plurality of first electrode tabs 300 are bent with respect to the electrode assembly 200 and placing the first current collecting plate 600 in a biased manner so as to come into contact with all of the weld portions 320 of the plurality of first electrode tabs 300.

In such aspects, the first current collecting plate 600 may be positioned to be biased to one side in the thickness direction of the electrode assembly 200. Based on FIG. 11, for example, the coordinate value of the center point of the width of the first current collecting plate 600 in the X-axis direction may be biased in the negative (-) X-axis direction relative to the coordinate value of the center point of the thickness of the electrode assembly 200.

Referring to FIGS. 13 and 14, the operation S320 of biasing the second current collecting plate 700 may include an operation of removing the block 900 in a state in which the plurality of second electrode tabs 350 are bent with respect to the electrode assembly 200 and placing the second current collecting plate 700 in a biased manner so as to come into contact with all of the weld portions 370 of the plurality of second electrode tabs 350.

In such aspects, the second current collecting plate 700 may be positioned to be biased to one side in the thickness direction of the electrode assembly 200. Based on FIG. 14, for example, the coordinate value of the center point of the width of the second current collecting plate 700 in the X-axis direction may be biased in the negative (-) X-axis direction relative to the coordinate value of the center point of the thickness of the electrode assembly 200.

The operation S400 of welding the electrode tab is an operation of welding the current collecting plates 600 and 700 and the plurality of electrode tabs 300 and 350, respectively. The operation S400 of welding the electrode tab may include an operation S410 of welding the first electrode tab and an operation S420 of welding the second electrode tab.

For example, the operation S410 of welding the first electrode tab may include an operation of welding the flat portion 601 of the first current collecting plate 600 and all of the weld portions 320 of the plurality of first electrode tabs 300 by laser welding. In such aspects, as illustrated in FIG. 6, a plurality of welding line portions 670 may be formed on the flat portion 601.

For example, the operation S420 of welding the second electrode tab may include an operation of welding the flat portion 701 of the second current collecting plate 700 and all of the weld portions 370 of the plurality of second electrode tabs 350 by laser welding. In such aspects, as illustrated in FIG. 7, a plurality of welding line portions 770 may be formed on the flat portion 701.

The operation S500 of repositioning the current collecting plate is an operation of moving the current collecting plates 600 and 700 to positions that are not biased with respect to the electrode assembly 200. The operation S500 of repositioning the current collecting plate may include an operation S510 of repositioning the first current collecting plate and an operation S520 of repositioning the second current collecting plate.

Referring to FIGS. 9 and 11, the operation S510 of repositioning the first current collecting plate may include an operation of fixing the electrode assembly 200 and moving the first current collecting plate 600 in a direction D12 opposite to the direction D11 in which the block 900 is moved (see, *e.g.,* FIG. 10) to bend the first electrode tabs 300. According to one or more aspects of the present disclosure, the first current collecting plate 600 may be fixed, and the electrode assembly 200 may be moved relative to the first current collecting plate 600.

By the operation S510 of repositioning the first current collecting plate, the weld portion 320 of the first electrode tab 300 may be positioned to be biased to one side relative to the position of the root portion 310, and a peak point PK1 may be formed in the intermediate portion 330 to be biased to the opposite side of the one side to which the weld portion 320 is biased relative to the position of the root portion 310.

The weld portion 320 of the first electrode tab 300 may be positioned to be biased to one side in the width direction of the first current collecting plate 600 relative to the position of the root portion 310, and the peak point PK1 may be positioned to be biased to the opposite side of the one side in the width direction of the first current collecting plate 600 relative to the position of the root portion 310.

For example, by performing the operation S510 of repositioning the first current collecting plate based on FIG. 9, the coordinate value of the center point of the thickness of the electrode assembly 200 in the X-axis direction and the coordinate value of the center point of the width of the first current collecting plate 600 may be the same. For example, the central line and/or axis of the first current collecting plate 600 along the third direction *(i.e.,* extending in the Z-axis direction) is aligned with a central line and/or axis of the electrode assembly 200 along the third direction.

Referring to FIGS. 12 and 14, the operation S520 of repositioning the second current collecting plate may include an operation of fixing the electrode assembly 200 and moving the second current collecting plate 700 in a direction D22 opposite to the direction D21 in which the block 900 is moved (*see, e.g.,* FIG. 13) to bend the second electrode tab 350. According to one or more aspects of the present disclosure, the second current collecting plate 700 may be fixed, and the electrode assembly 200 may be moved relative to the second current collecting plate 700.

By the operation S520 of repositioning the second current collecting plate, the weld portion 370 of the second electrode tab 350 may be positioned to be biased to one side relative to the position of the root portion 360, and a peak point PK2 may be formed in the intermediate portion 380 to be biased to the one side or to the opposite side of the one side to which the weld portion 370 is biased relative to the position of the root portion 360.

The weld portion 370 of the second electrode tab 350 may be positioned to be biased to one side in the width direction of the second current collecting plate 700 relative to the position of the root portion 360, and the peak point PK2 may be positioned to be biased to the one side or to the opposite side of the one side in the width direction of the second current collecting plate 700 relative to the position of the root portion 360.

For example, by performing the operation S520 of repositioning the second current collecting plate based on FIG. 12, the coordinate value of the center point of the thickness of the electrode assembly 200 in the X-axis direction and the coordinate value of the center point of the width of the second current collecting plate 700 may be the same. For example, the central line and/or axis of the second current collecting plate 700 along the third direction *(i.e.,* extending in the Z-axis direction parallel) is aligned with a central line and/or axis of the electrode assembly 200 along the third direction.

The electrode tab bending operation S200, the current collecting plate biasing operation S300, the electrode tab welding operation S400, and the current collecting plate repositioning operation S500 may be performed outside the case 100.

The secondary battery manufacturing method according to one or more aspects of the present disclosure may further include an operation S600 of connecting a cap assembly and a current collector, an operation S700 of connecting a current collecting plate and the current collector, an operation S800 of inserting the current collecting plate and the electrode tab, and a cap plate connecting operation S900.

Referring to FIGS. 2 to 4, the operation S600 of connecting the cap assembly and the current collector is an operation of connecting the current collectors 500 and 550 to the terminals 420 and 430 of the cap assembly 400 including the cap plate 410 and the terminals 420 and 430. The operation S600 of connecting the cap assembly and the current collector may include an operation of connecting the first current collector 500 to the first terminal 420 and an operation of connecting the second current collector 550 to the second terminal 430.

For example, the first terminal 420 and the first current collector 500 may be joined by laser welding, and the second terminal 430 and the second current collector 550 may be joined by laser welding.

The operation S700 of connecting the current collecting plate and the current collector is an operation of connecting the current collectors 500 and 550 to the current collecting plates 600 and 700, respectively. The operation S700 of connecting the current collecting plate and the current collector may include an operation S710 of connecting the first current collecting plate 600 and the first current collector 500, and an operation S720 of connecting the second current collecting plate 700 and the second current collector 550.

For example, operation S710 may include an operation of welding the first current collecting plate 600 and the first current collector 500 by laser welding, and operation S720 may include an operation of welding the second current collecting plate 700 and the second current collector 550 by laser welding.

As described with reference to FIGS. 6 and 7, the first current collecting plate 600 welded to the first current collector 500 may have a current collector welding line portion 650 extending in the width direction of the first current collecting plate 600, and the second current collecting plate 700 welded to the second current collector 550 may have a current collector welding line portion 750 extending in the width direction of the second current collecting plate 700.

The operation S800 of inserting the current collecting plate and the electrode tab is an operation of inserting the electrode assembly 200 and the welded current collecting plates 600 and 700 and electrode tabs 300 and 350 into the case 100. In operation S800, the current collectors 500 and 550 may also be inserted into the case 100. Operations S100, S200, S300, S400, S500, S600, and S700 may be performed prior to operation S800.

The cap plate connecting operation S900 is an operation of connecting the cap plate 410 to the case 100 so that the cap plate 410 seals the case 100. For example, an outer peripheral edge of the cap plate 410 may be connected by laser welding to the upper end portions of the front wall 120, the rear wall 130, the first side wall 140, and the second side wall 150 that define the opening 160 of the case 100.

According to the present disclosure, a plurality of electrode tabs protruding from an electrode assembly can all be welded to a current collecting plate. Accordingly, electrical resistance between the electrode assembly and the current collecting plate and can be reduced, thereby improving charging/discharging performance.

According to the present disclosure, the electrode tabs are securely welded, unlike related secondary batteries in which the electrode tabs are not welded. As such, there is no need to form an excessive number of electrode tabs in the electrode assembly and there is no need to form an excessively (or substantially) long current collecting plate, for example, to reduce resistance, and thus the production costs of a secondary battery and a battery pack including the secondary battery can be reduced.

The portable device, vehicle, battery pack, battery, devices for manufacturing the battery, and/or any other relevant devices or components according to aspects of the present disclosure described herein may be implemented utilizing any suitable hardware, firmware (e.g., an application-specific integrated circuit), software, or a combination of software, firmware, and hardware. For example, the various components of the device may be formed on one integrated circuit (IC) chip or on separate IC chips. Further, the various components of the device may be implemented on a flexible printed circuit film, a tape carrier package (TCP), a printed circuit board (PCB), or formed on one substrate. Further, the various components of the device may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, or the like. Also, a person of skill in the art should recognize that the functionality of various computing devices may be combined or integrated into a single computing device, or the functionality of a particular computing device may be distributed across one or more other computing devices without departing from the scope of the aspects of the present disclosure.

A person of ordinary skill in the art, in view of the present disclosure in its entirety, would appreciate that each suitable feature of the various aspects of the present disclosure may be combined or combined with each other, partially or entirely, and may be technically interlocked and operated in various suitable ways, and each embodiment may be implemented independently of each other or in conjunction with each other in any suitable manner unless otherwise stated or implied.

It will be understood that descriptions of features or aspects within each embodiment should typically be considered as available for other similar features or aspects in other embodiments, unless otherwise described. Thus, as would be apparent to one of ordinary skill in the art, features, characteristics, and/or elements described in connection with a particular embodiment may be used singly or in combination with features, characteristics, and/or elements described in connection with other embodiments unless otherwise specifically indicated. It is to be understood that the foregoing is an illustration of various example embodiments and is not to be construed as limited to the specific embodiments disclosed herein, and that various modifications to the disclosed embodiments, as well as other example embodiments, are intended to be included within the scope of the present disclosure as defined in the appended claims, and their equivalents.

## Claims

1. A secondary battery (2) comprising:
a case (100) having an internal space (101);
a cap assembly (400) comprising a cap plate (410) closing the case (100) and a terminal (420, 430) supported by the cap plate (410);
a current collecting plate (600, 700) located in the internal space (101) and electrically connected to the terminal (420, 430);
an electrode assembly (200) accommodated in the internal space (101); and
a plurality of electrode tabs (300, 350) protruding from the electrode assembly (200), each comprising
a root portion (310, 360) connected to the electrode assembly (200),
a weld portion (320, 370) welded to the current collecting plate (600, 700) and biased to one side relative to a position of the root portion (310, 360), and
an intermediate portion (330, 380) connecting the root portion (310, 360) and the weld portion (320, 370) and having a peak point (PK1, PK2) biased to the one side or biased to an opposite side relative to the one side.

2. The secondary battery (2) as claimed in claim 1, wherein the plurality of electrode tabs (300, 350) overlap in a thickness direction of the electrode assembly (200).

3. The secondary battery (2) as claimed in claim 1 or 2, wherein, for each of the electrode tabs (300, 350),
the weld portion (320, 370) is biased to one side in a width direction of the current collecting plate (600, 700) relative to the position of the root portion (310, 360), and
the peak point is biased to the opposite side of the one side in the width direction of the current collecting plate (600, 700) relative to the position of the root portion (310, 360).

4. The secondary battery (2) as claimed in any one of claims 1 to 3, wherein the current collecting plate (600, 700) comprises a plurality of welding line portions (670, 770) welded to the weld portions (320, 370) of the electrode tabs (300, 350), and extending in a width direction of the current collecting plate (600, 700) and spaced apart in a longitudinal direction of the current collecting plate (600, 700).

5. The secondary battery (2) as claimed in any one of claims 1 to 4, wherein, for each of the electrode tabs (300, 350), the weld portion (320, 370) is located between the electrode assembly (200) and the current collecting plate (600, 700) and is welded to a side of the current collecting plate (600, 700) facing the electrode assembly (200).

6. The secondary battery (2) as claimed in any one of claim 1 to 5, further comprising a current collector (500, 550) connecting the terminal (420, 430) and the current collecting plate (600, 700).

7. The secondary battery (2) as claimed in any one of claims 1 to 6, wherein the electrode assembly (200) comprises
a first electrode (114, 210),
a second electrode (220) separated from the first electrode (114, 210), and
a separator (230) between the first electrode (114, 210) and the second electrode (220).

8. The secondary battery (2) as claimed in claims 6 and 7, wherein
the electrode tabs (300, 350) comprise a first electrode tab (300) connected to the first electrode (114, 210) and a second electrode tab (350) connected to the second electrode (220),
the current collecting plate (600, 700) comprises a first current collecting plate (600) welded to the first electrode tab (300) and a second current collecting plate (700) welded to the second electrode tab (350),
the terminal (420, 430) comprises a first terminal (420) and a second terminal (430) spaced from the first terminal (420), and
the current collector (500, 550) comprises a first current collector (500) connecting the first terminal (420) and the first current collecting plate (600) and a second current collector (550) connecting the second terminal (430) and the second current collecting plate (700).

9. The secondary battery (2) as claimed in claim 8, wherein
the case (100) comprises a first side wall (140) and a second side wall (150) facing each other,
the first current collecting plate (600) is between the electrode assembly (200) and the first sidewall in the internal space (101), and
the second current collecting plate (700) is between the electrode assembly (200) and the second sidewall in the internal space (101).

10. A method of manufacturing a secondary battery (2), the method comprising:
supplying an electrode assembly (200) having a plurality of electrode tabs (300, 350) protruding from the electrode assembly (200);
bending the plurality of electrode tabs (300, 350) so that the plurality of electrode tabs (300, 350) lie in the same direction with respect to the electrode assembly (200);
biasing the current collecting plate (600, 700) in the same direction in which the plurality of electrode tabs (300, 350) are bent with respect to the electrode assembly (200) so that the current collecting plate (600, 700) comes into contact with the plurality of electrode tabs (300, 350);
welding the current collecting plate (600, 700) and the plurality of electrode tabs (300, 350); and
moving the current collecting plate (600, 700) to a position that is not biased with respect to the electrode assembly (200).

11. The method as claimed in claim 10, wherein the electrode tab (300, 350) comprises a root portion (310, 360) connected to the electrode assembly (200), a weld portion (320, 370) welded to the current collecting plate (600, 700), and an intermediate portion (330, 380) connecting the root portion (310, 360) and the weld portion (320, 370), and
wherein the moving of the current collecting plate (600, 700) biases the weld portion (320, 370) to one side relative to the position of the root portion (310, 360), and forms a peak point in the intermediate portion (330, 380) that is biased to an opposite side relative to the one side.

12. The method as claimed in claim 11, wherein, by the moving of the current collecting plate (600, 700), the weld portion (320, 370) is biased to one side relative to the root portion (310, 360) in a width direction of the current collecting plate (600, 700), and the peak point is biased to the opposite side of the one side in the width direction of the current collecting plate (600, 700) relative to the root portion (310, 360).

13. The method as claimed in any one of claims 10 to 12, further comprising inserting the electrode assembly (200), the welded current collecting plate (600, 700) and electrode tabs (300, 350) into a case (100).

14. The method as claimed in claim 13, wherein, prior to the inserting of the electrode assembly (200), the method further comprises:
connecting a current collector (500, 550) to a terminal (420, 430) of a cap assembly (400) comprising a cap plate (410) and the terminal (420, 430) supported by the cap plate (410); and
connecting the current collector (500, 550) to the current collecting plate (600, 700).

15. A battery pack (1) comprising:
a housing (10); and
a plurality of secondary batteries inside the housing (10),
wherein each of the secondary batteries is configured in accordance with any one of claims 1 to 10.
